# EUROPÄISCHE PATENTANMELDUNG

(11) **EP 3 808 945 A1**
(43) Veröffentlichungstag der Anmeldung: **21.04.2021**
(21) Anmeldenummer: 19203608.5
(22) Anmeldetag: 16.10.2019
(51) Int. Cl.: F01D 25/28, B23P 19/04, H02K 15/00

(54) **MONTAGE-/DEMONTAGEVORRICHTUNG FÜR EINEN ODER MEHRERE ROTORBLÖCKE EINER TURBOLADERANORDNUNG**

(71) Anmelder: ABB Schweiz AG, 5400 Baden (CH)
(72) Erfinder: Albiez, Bernd Marcus, 79736 Rickenbach (DE); Mathey, Christoph, 5442 Fislisbach (CH)
(74) Vertreter: Zimmermann & Partner Patentanwälte mbB

(57) **Zusammenfassung**

Die Erfindung betrifft einen Montage-/Demontagevorrichtung (10) zum translatorischen Verschieben einer oder mehrerer Rotorblöcke in einem Gehäuse (130) einer ein- oder mehrstufigen Turboladeranordnung (100). Die Montage-/Demontagevorrichtung (10) umfasst ein Trägerelement (20) mit ersten und zweiten Führungsschienen (23, 24). Ferner umfasst die Montage-/Demontagevorrichtung (10) eine Verschiebevorrichtung (30) mit einem ersten Schlitten (31), der auf den ersten Führungsschienen (23) verschiebbar angeordnet ist, und einem zweiten Schlitten (32), der auf den zweiten Führungsschienen (24) verschiebbar angeordnet ist. Zusätzlich umfasst die Verschiebevorrichtung (30) eine Spindel (33), die im Trägerelement (20) drehbar gelagert ist, sowie ein Verbindungselement (34), das mit der Spindel (33), dem ersten Schlitten (31) und/oder mit dem zweiten Schlitten (32) verbunden ist. Außerdem umfasst die Montage-/Demontagevorrichtung (10) eine Befestigungsvorrichtung (40) mit einem ersten Befestigungsaufbau (41) zur Befestigung eines ersten Rotorblocks (51) und einem zweiten Befestigungsaufbau (42) zur Befestigung eines zweiten Rotorblocks (52). Der erste Befestigungsaufbau (41) ist mit dem ersten Schlitten (31) und der zweite Befestigungsaufbau (42) mit dem zweiten Schlitten (32) verbunden.

## Beschreibung

### TECHNISCHES GEBIET

Die Erfindung bezieht sich auf das Gebiet der Abgasturbolader für aufgeladene Brennkraftmaschinen, insbesondere mehrstufige Abgasturbolader. Insbesondere betrifft die Erfindung eine Montage-/Demontagevorrichtung für einen oder mehrere Rotorblöcke einer Turboladeranordnung sowie Verfahren in Zusammenhang der Montage/Demontage von einem oder mehreren Rotorblöcken.

### TECHNISCHER HINTERGRUND

Abgasturbolader werden zum Aufladen von großen Brennkraftmaschinen eingesetzt. Diese treiben beispielsweise Schiffe oder große Stromaggregate an.

Um den Abgasturbolader im Intervall von einigen tausend Arbeitsstunden zu warten, müssen die rotierenden Teile aus dem Gehäuse entnommen werden. Hierfür werden bei herkömmlichen Abgasturboladern die mehrteiligen Gehäuse entfernt und anschließend der Rotor mithilfe eines Krans in axialer Richtung aus dem Gehäuse gehoben. Konkret wird zur Demontage eines Abgasturboladers in der Regel das Verdichtergehäuse entfernt, um mit einem Ausleger des Krans oberhalb des Schwerpunkts des Rotorblocks angreifen zu können.

Der Rotorblock eines Abgasturboladers umfasst neben den rotierenden Teilen der Welle und der mit der Welle verbundenen Turbinen- und Verdichterräder auch die Lagerteile, also Axial- und Radiallager sowie innere Lagergehäuseteile. Dieser Rotorblock wird auch als Cartridge bezeichnet. Im Servicefall besteht die Möglichkeit, ein Cartridge eines Abgasturboladers vollständig auszutauschen. Dadurch verringert sich die Stillstandzeit des Abgasturboladers und damit der mittels des Abgasturboladers aufgeladenen Brennkraftmaschine. Weiter verringern lässt sich der Aufwand für den Ausbau und das Wiedereinsetzen des Cartridges, wenn möglichst wenige Gehäuseteile entfernt werden müssen. Beispielsweise ist es wünschenswert, das äußere Verdichtergehäuse, welches mit seinem großen Luftaustrittsstutzen fest in das Rohrsystem der Brennkraftmaschine integriert ist, genauso wie das gesamte Turbinengehäuse während den Wartungsarbeiten nicht abbauen zu müssen. Insbesondere bei mehrstufige Turboladeranordnungen, die aus mehreren separaten Turboladerbaugruppen bestehen, sind die Service- und Wartungsarbeiten besonders zeit- und kostenintensiv und mit relativ langen Ausfall-/Stillstandzeiten verbunden.

Demnach besteht das Bedürfnis eine verbesserte Montage-/Demontagevorrichtung und Verfahren bereitzustellen, mit welchen die Wartungs-/Servicezeiten und damit die Ausfall-/Stillstandzeiten reduziert werden können.

### ZUSAMMENFASSUNG DER ERFINDUNG

Zur Lösung des obengenannten Problems wird eine Montage-/Demontagevorrichtung, ein Verfahren zum gleichzeitigen Einsetzen von mindestens zwei Rotorblöcken, Verfahren zum Herausziehen/Einsetzen eines oder mehrerer Rotorblöcke sowie ein Verfahren zum Bewegen eines oder mehrerer Rotorblöcke gemäß den unabhängigen Ansprüchen bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Montage-/Demontagevorrichtung zum translatorischen Verschieben einer oder mehrerer Rotorblöcke in einem Gehäuse einer ein- und/oder mehrstufigen Turboladeranordnung bereitgestellt. Die Montage-/Demontagevorrichtung, umfasst ein Trägerelement, mit auf einer ersten Längsseite des Trägerelements angeordneten ersten Führungsschienen, sowie auf einer zweiten Längsseite des Trägerelements angeordneten zweiten Führungsschienen. Zusätzlich umfasst die Montage-/Demontagevorrichtung eine Verschiebevorrichtung mit einem ersten Schlitten, der auf den ersten Führungsschienen verschiebbar angeordnet ist, sowie einem zweiten Schlitten, der auf den zweiten Führungsschienen verschiebbar angeordnet ist. Ferner umfasst die Verschiebevorrichtung eine Spindel, die im Trägerelement drehbar gelagert ist. Darüber hinaus umfasst die Verschiebevorrichtung ein Verbindungselement, das mit der Spindel, dem ersten Schlitten und/oder mit dem zweiten Schlitten verbunden ist. Das Verbindungselement ist konfiguriert, um eine Rotationsbewegung der Spindel in eine Translationsbewegung des ersten Schlitten und/oder des zweiten Schlitten zu übertragen. Außerdem umfasst die Montage-/Demontagevorrichtung eine Befestigungsvorrichtung mit einem ersten Befestigungsaufbau zur Befestigung eines ersten Rotorblocks und einem zweiten Befestigungsaufbau zur Befestigung eines zweiten Rotorblocks. Der erste Befestigungsaufbau ist mit dem ersten Schlitten verbunden und der zweite Befestigungsaufbau ist mit dem zweiten Schlitten verbunden.

Somit wird vorteilhafterweise eine verbesserte Montage-/Demontagevorrichtung bereitgestellt, mit welcher die Wartungs-/Servicezeiten und damit die Ausfall-/Stillstandzeiten reduziert werden können. Insbesondere ermöglicht die Montage-/Demontagevorrichtung, gemäß der vorliegenden Offenbarung, ein gleichzeitiges Montieren/Demontieren von zwei Rotorblöcken, beispielsweise eines ersten Rotorblocks einer Hochdruckstufe und eines zweiten Rotorblocks einer Niederdruckstufe. Ferner kann mit der hierin beschriebenen Montage-/Demontagevorrichtung wahlweise der erste Rotorblock oder der zweite Rotorblock in das Gehäuse der ein- und/oder mehrstufigen Turboladeranordung eingefahren oder herausgezogen werden.

Gemäß einem weiteren Aspekt der Erfindung, wird ein Verfahren zum gleichzeitigen Einsetzen von mindestens zwei Rotorblöcken in ein Gehäuse einer mehrstufigen Turboladeranordnung mittels einer Montage-/Demontagevorrichtung bereitgestellt. Insbesondere ist die Montage-/Demontagevorrichtung eine Montage-/Demontagevorrichtung gemäß einer der hierin beschriebenen Ausführungsformen. Das Verfahren umfasst ein Montieren von jeweils mindestens ein Führungselement, z. B. eine Führungsstange, pro Rotorblock der Turboladeranordnung. Das mindestens eine Führungselement ist angeordnet und konfiguriert, um die Rotorblöcke beim Einfahren entlang der Rotationsachse der Rotorblöcke zu führen. Zusätzlich umfasst das Verfahren ein Verbinden der mindestens zwei Rotorblöcke mittels eines starren Befestigungselements. Ferner umfasst das Verfahren ein Befestigen eines ersten Befestigungsaufbaus einer Montage-/Demontagevorrichtung mit einem ersten Rotorblock sowie ein Befestigen eines zweiten Befestigungsaufbaus einer Montage-/Demontagevorrichtung mit einem zweiten Rotorblock. Darüber hinaus umfasst das Verfahren ein Einfahren der mindestens zwei Rotorblöcke in das Gehäuse der mehrstufigen Turboladeranordnung.

Gemäß einem weiteren Aspekt der Erfindung, wird ein Verfahren zum Herausziehen/Einsetzen eines oder mehrerer Rotorblöcke aus einem Gehäuse einer ein- und/oder mehrstufigen Turboladeranordnung mittels einer Montage-/Demontagevorrichtung bereitgestellt. Insbesondere ist die Montage-/Demontagevorrichtung eine Montage-/Demontagevorrichtung gemäß einer der hierin beschriebenen Ausführungsformen. Das Verfahren umfasst ein Montieren von jeweils mindestens einem Führungselement pro Rotorblock der Turboladeranordnung. Die Führungselemente sind angeordnet und konfiguriert, um die Rotorblöcke beim Ausfahren entlang der Rotationsachse der Rotorblöcke zu führen. Zusätzlich umfasst das Verfahren ein Befestigen eines Trägerelements der Montage-/Demontagevorrichtung mit dem Gehäuse der ein- und/oder mehrstufigen Turboladeranordnung. Ferner umfasst das Verfahren, ein Befestigen eines ersten Befestigungsaufbaus der Montage-/Demontagevorrichtung mit einem ersten Rotorblock. Alternativ oder zusätzlich umfasst das Verfahren, ein Befestigen eines zweiten Befestigungsaufbaus der Montage-/Demontagevorrichtung mit einem zweiten Rotorblock. Darüber hinaus umfasst das Verfahren ein Herausziehen des ersten Rotorblocks und/oder des zweiten Rotorblocks durch Verschieben des ersten Befestigungsaufbaus und/oder des zweiten Befestigungsaufbaus relativ zum und entlang des Trägerelements.

Gemäß einem weiteren Aspekt der Erfindung, wird ein Verfahren zum Bewegen eines oder mehrerer Rotorblöcke bereitgestellt. Das Verfahren umfasst ein Befestigen des einen oder der mehreren Rotorblöcke an einem starren Befestigungselement, insbesondere einem starren bügelartigen Befestigungselement. Ferner umfasst das Verfahren ein Bewegen des einen oder der mehreren Rotorblöcke, während der eine oder die mehreren Rotorblöcke am Befestigungselement befestigt sind.

Somit werden vorteilhafterweise Verfahren bereitgestellt, mit welchen bei Wartungs-/Servicearbeiten von Turboladeranordnungen der dafür notwendige Zeitaufwand reduziert werden kann, so dass Ausfall-/Stillstandzeiten reduziert werden können.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische Frontansicht von einer Lufteinlassseite einer Turboladeranordnung mit einer Montage-/Demontagevorrichtung gemäß hierin beschriebenen Ausführungsformen;
- Figur 2: eine Schnittansicht entlang der Linie A-A in Figur 1;
- Figur 3: eine schematische Seitenansicht einer Turboladeranordnung mit einer Montage-/Demontagevorrichtung gemäß hierin beschriebenen Ausführungsformen;
- Figur 4: eine schematische Frontansicht von einer Lufteinlassseite einer mehrstufigen Turboladeranordnung mit einer Montage-/Demontagevorrichtung gemäß hierin beschriebenen Ausführungsformen; und
- Figur 5: eine schematische perspektivische Ansicht einer mehrstufigen Turboladeranordnung mit einer Montage-/Demontagevorrichtung gemäß hierin beschriebenen Ausführungsformen;

### DETAILLIERTE BESCHREIBUNG DER FIGUREN

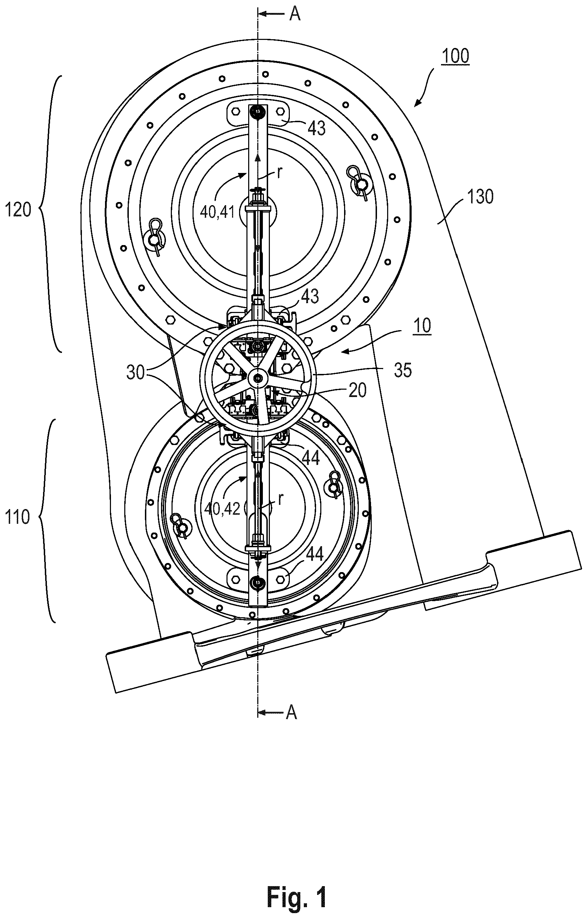

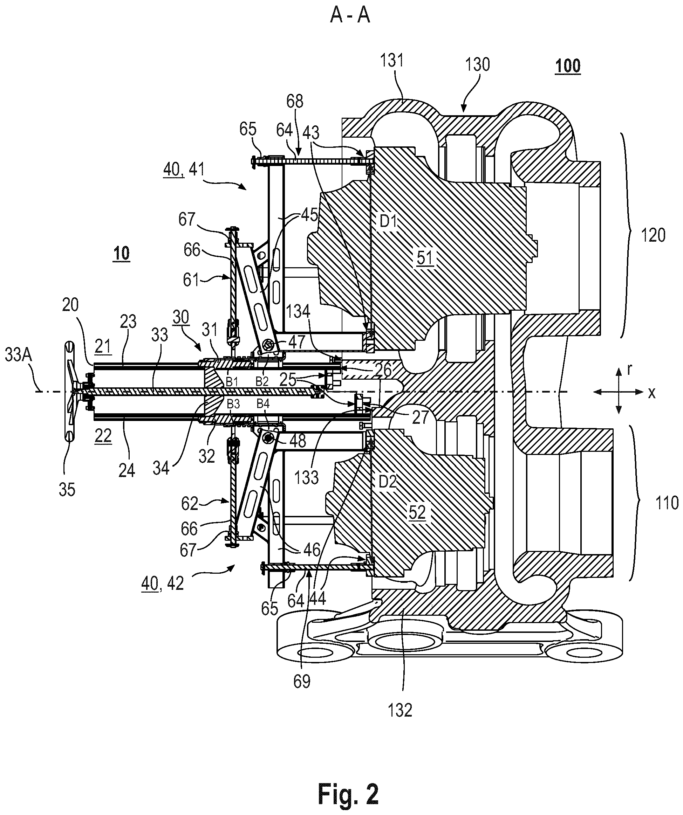

Mit Bezugnahme auf die Figuren 1 und 2 wird eine Montage-/Demontagevorrichtung 10 gemäß der vorliegenden Offenbarung beschrieben. Die Montage-/Demontagevorrichtung 10 ist geeignet zum translatorischen Verschieben einer oder mehrerer Rotorblöcke in einem Gehäuse 130 einer ein- und/oder mehrstufigen Turboladeranordnung 100. Unter dem Ausdruck "translatorisches Verschieben" ist ein Verschieben entlang einer Rotationsachse eines in einem im Rotorblock enthaltenen Rotors, insbesondere entlang der Wellenachse des im Rotorblock enthaltenen Rotors, zu verstehen.

Figur 1 zeigt eine schematische Frontansicht von einer Lufteinlassseite einer Turboladeranordnung mit einer Montage-/Demontagevorrichtung gemäß hierin beschriebenen Ausführungsformen und Figur 2 zeigt eine Schnittansicht entlang der Linie A-A aus Figur 1.

Gemäß einer Ausführungsform, die mit anderen hierin beschriebenen Ausführungsformen kombiniert werden kann, umfasst die Montage-/Demontagevorrichtung 10 ein Trägerelement 20, eine Verschiebevorrichtung 30 und eine Befestigungsvorrichtung 40.

Das Trägerelement 20 umfasst erste Führungsschienen 23, die auf einer ersten Längsseite 21 des Trägerelements 20 angerangeordnet sind. Ferner umfasst das Trägerelement 20 zweite Führungsschienen 24, die auf einer zweiten Längsseite 22 des Trägerelements angerangeordnet sind. Typischerweise liegen sich die erste Längsseite 21 und die zweite Längsseite 22 gegenüber, wie es beispielhaft in Figur 2 dargestellt ist.

Die Verschiebevorrichtung 30 umfasst einen ersten Schlitten 31, der auf den ersten Führungsschienen 23 verschiebbar angeordnet ist. Ferner umfasst die Verschiebevorrichtung 30 einen zweiten Schlitten 32, der auf den zweiten Führungsschienen 24 verschiebbar angeordnet ist. Zusätzlich umfasst die Verschiebevorrichtung 30 eine Spindel 33, die im Trägerelement 20 drehbar gelagert ist. Wie in den Figuren 1 und 2 beispielhaft dargestellt ist, kann die Spindel 33 mit einem Spindelrad, insbesondere mit einem Handrad 35, verbunden sein, um die Spindel zu drehen. Alternativ kann die Spindel auch mit einem Motor verbunden sein. Die Spindel kann demnach händisch oder maschinell gedreht werden.

Darüber hinaus umfasst die Verschiebevorrichtung 30 ein Verbindungselement 34, das mit der Spindel 32, dem ersten Schlitten 31 und/oder mit dem zweiten Schlitten 32 verbunden ist. Das Verbindungselement ist konfiguriert, um eine Rotationsbewegung der Spindel in eine Translationsbewegung des ersten Schlittens 31 und/oder des zweiten Schlittens 32 zu übertragen. Insbesondere, weist das Verbindungselement eine Bohrung mit einem Innengewinde auf, welches auf das Außengewinde der Spindel passt. Typischerweise sind der erste Schlitten 31 und der zweiten Schlitten 32 lösbar mit dem Verbindungselement 34 verbunden. Mit anderen Worten, der erste Schlitten 31 und/oder der zweiten Schlitten 32 können von dem Verbindungselement 34 entkoppelt werden, so dass der erste Schlitten 31 oder der zweiten Schlitten 32 durch eine Rotationsbewegung der Spindel separat voneinander bewegt werden können. Somit können bei Bedarf ein erster Rotorblock 51 oder ein zweiter Rotorblock 52 unabhängig voneinander in das Gehäuse der ein- und/oder mehrstufigen Turboladeranordnung eingefahren oder herausgezogen werden.

Die Befestigungsvorrichtung 40 umfasst einen ersten Befestigungsaufbau 41 zur Befestigung eines ersten Rotorblocks 51 und sowie einen zweiten Befestigungsaufbau 42 zur Befestigung eines zweiten Rotorblocks 52. Der erste Befestigungsaufbau 41 ist mit dem ersten Schlitten 31 verbunden. Der zweite Befestigungsaufbau 42 ist mit dem zweiten Schlitten 32 verbunden. In diesem Zusammenhang sei darauf hingewiesen, dass prinzipiell auch mehr als zwei Befestigungsaufbauten vorgesehen werden können (in den Figuren nicht dargestellte Ausführungsform). Beispielsweise kann die Montage-/Demontagevorrichtung um einen dritten, vierten, etc. Befestigungsaufbau erweitert werden, um eine Montage-/Demontagevorrichtung für eine entsprechende Anzahl an Rotorblöcken bereitzustellen.

Gemäß einer Ausführungsform, die mit anderen hierin beschriebenen Ausführungsformen kombiniert werden kann, umfasst das Trägerelement 20 auf einer Befestigungsseite des Trägerelements Befestigungselemente 25 zur Befestigung an dem Gehäuse 130 der ein- und/oder mehrstufigen Turboladeranordnung 100. Insbesondere sind die Befestigungselemente 25 angeordnet und konfiguriert, um das Trägerelement 20 an einem Gehäusebereich zu befestigen, der zwischen einer Hochdruckstufe 110 und einer Niederdruckstufe 120 des Gehäuses 130 angeordnet ist.

In diesem Zusammenhang sei angemerkt, dass das Trägerelement 20 derart konfiguriert ist, dass wenn es an dem Gehäuse 130 der ein- und/oder mehrstufigen Turboladeranordnung 100 befestigt ist, die Funktion eines Kragträgers übernimmt. Das Trägerelement kann auch als Tragrahmen bezeichnet werden. Ein Kragträger (in der Literatur auch als Kragbalken oder Kragarm bekannt) ist allgemein ein einseitig gelagerter, waagrechter Balken, welcher eine Last trägt. Der Kragbalken weist ein einziges Auflager auf (hier die Befestigung des Trägerelements 20 mit dem Gehäuse 130). Der Kragbalken kann im Allgemeinen auf Schub, Biegung und Torsion beansprucht werden, wobei das Auflager alle sechs Freiheitsgrade (Kräfte und Momente) fixiert.

Gemäß einer Ausführungsform, die mit anderen hierin beschriebenen Ausführungsformen kombiniert werden kann, ist ein erstes Befestigungsende 26 des Trägerelements 20 mit einem verdichterseitigen Flansch 134 eines Gehäuses 131 der Niederdruckstufe 120 des Gehäuses 130 einer ein- und/oder mehrstufigen Turboladeranordnung verbindbar. Ein zweites Befestigungsende 27 des Trägerelements 20 ist mit einem verdichterseitigen Flansch 133 eines Gehäuses 132 der Hochdruckstufe 110 des Gehäuses 130 der ein- und/oder mehrstufigen Turboladeranordnung verbindbar ist. In diesem Zusammenhang sei darauf hingewiesen, dass das mehrstufige Gehäuse 130 einteilig, d.h. einstückig, oder mehrteilig ausgeführt sein kann. Mit anderen Worten, das Gehäuse 131 der Niederdruckstufe 120 und das Gehäuse 132 der Hochdruckstufe 110 kann integral ausgeführt sein oder aus separaten Gehäuseteilen und/oder mehrteiligen Gehäuseeinheiten bestehen.

Gemäß einer Ausführungsform, die mit anderen hierin beschriebenen Ausführungsformen kombiniert werden kann, umfasst der erste Befestigungsaufbau 41 zwei in radialer Richtung r, insbesondere in radialer Richtung bezüglich der Rotationsachse des ersten Rotorblocks 51, beabstandete, sich gegenüberliegende erste Befestigungselemente 43 zur Befestigung des ersten Befestigungsaufbaus 41 an dem ersten Rotorblock 51, wie es beispielhaft in den Figuren 1-3 dargestellt ist.

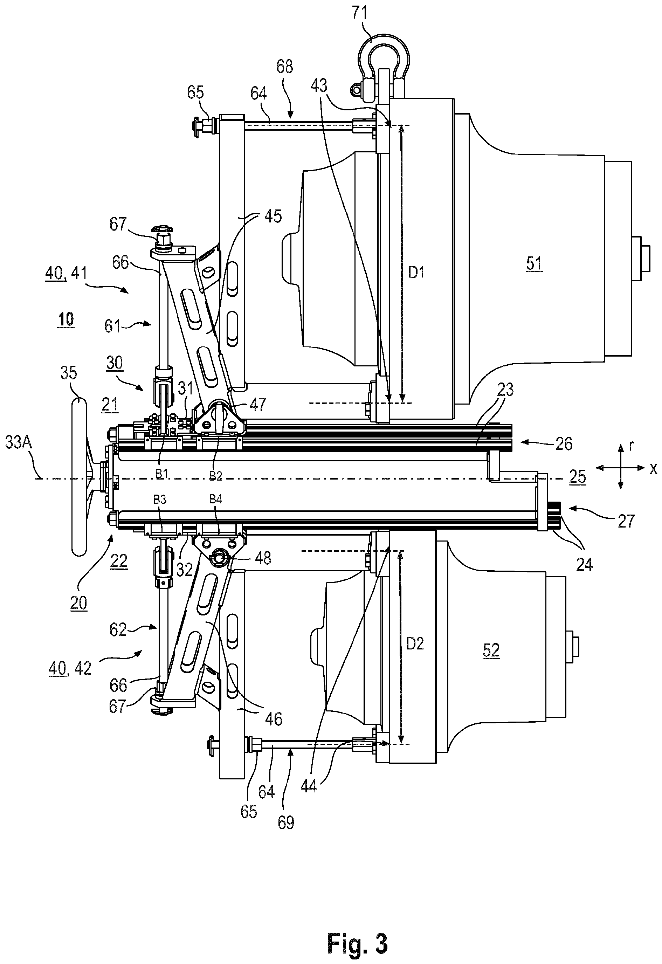

Gemäß einer Ausführungsform, die mit anderen hierin beschriebenen Ausführungsformen kombiniert werden kann, sind die ersten Befestigungselemente 43 über eine erste Profilstangenkonstruktion 45 mit einem ersten Kippbolzen 47 und einer ersten radialen Befestigung 61 verbunden. Der erste Kippbolzen 47 und die erste radiale Befestigung 61 sind mit dem ersten Schlitten 31 verbunden, wie es beispielhaft in den Figuren 2 und 3 dargestellt ist. Insbesondere sind der erste Kippbolzen 47 und die erste radiale Befestigung 61 an zwei in Richtung der Spindelachse 33A axial voneinander beabstandeten Befestigungsstellen B1, B2 mit dem ersten Schlitten 31 verbunden.

Gemäß einer Ausführungsform, die mit anderen hierin beschriebenen Ausführungsformen kombiniert werden kann, umfasst der zweite Befestigungsaufbau 42 zwei in radialer Richtung r, insbesondere in radialer Richtung bezüglich der Rotationsachse des zweiten Rotorblocks 52, beabstandete, sich gegenüberliegende zweite Befestigungselemente 44 zur Befestigung des zweiten Befestigungsaufbaus 42 an dem zweiten Rotorblock 52, wie es beispielhaft in den Figuren 1-3 dargestellt ist.

Gemäß einer Ausführungsform, die mit anderen hierin beschriebenen Ausführungsformen kombiniert werden kann, sind die zweiten Befestigungselemente 44 über eine zweite Profilstangenkonstruktion 46 mit einem zweiten Kippbolzen 48 und einer zweiten radialen Befestigung 62 verbunden. Der zweite Kippbolzen 48 und die zweite radiale Befestigung 62 sind mit dem zweiten Schlitten 32 verbunden, wie es beispielhaft in den Figuren 2 und 3 dargestellt ist. Insbesondere, sind der zweite Kippbolzen 48 und die zweite radiale Befestigung 62 an zwei in Richtung der Spindelachse 33A axial voneinander beanstandeten Befestigungsstellen B3, B4 mit dem zweiten Schlitten 32 verbunden.

Die erste Profilstangenkonstruktion 45 und die zweite Profilstangenkonstruktion 46 dienen zur Aufnahme und Übertragung von Kräften auf das Trägerelement 20.

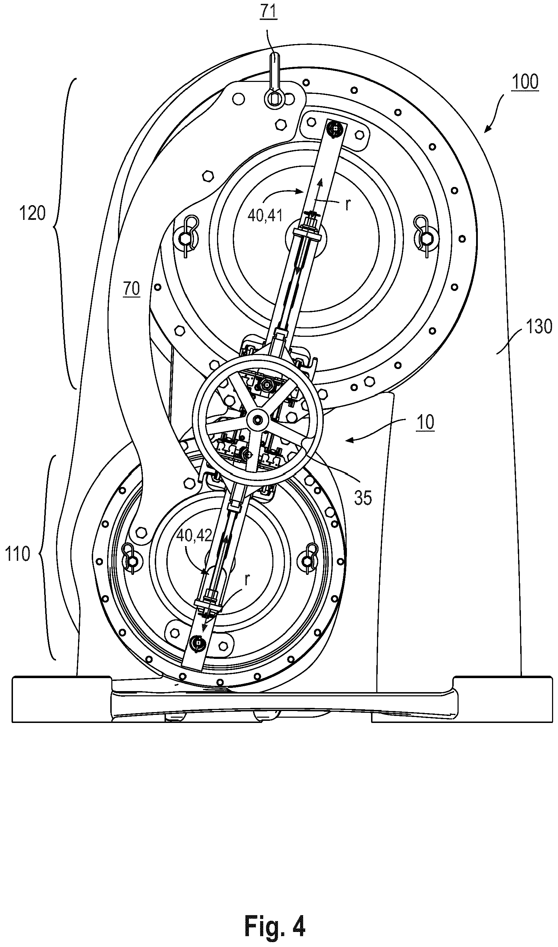

Gemäß einer Ausführungsform, die mit anderen hierin beschriebenen Ausführungsformen kombiniert werden kann, ist ein Abstand D1 zwischen den ersten Befestigungselementen 43 größer oder gleich als/wie ein Abstand D2 zwischen den zweiten Befestigungselementen 44 (D1 ≥ D2). Die Anstände D1 und D2 sind in den Figuren 3 und 4 eingezeichnet.

Gemäß einer Ausführungsform, die mit anderen hierin beschriebenen Ausführungsformen kombiniert werden kann, ist das Verbindungselement 34 über eine lösbare Verbindung, insbesondere eine oder mehrere Schraubverbindung(en), mit dem ersten Schlitten 31 und/oder mit dem zweiten Schlitten 32 verbunden.

Gemäß einer Ausführungsform, die mit anderen hierin beschriebenen Ausführungsformen kombiniert werden kann, umfasst mindestens eines der ersten Befestigungselemente 43 Mittel zum Einstellen der Ausrichtung des ersten Befestigungsaufbaus 41 bezüglich eines am ersten Befestigungsaufbau 41 zu befestigenden ersten Rotorblock 51. Insbesondere umfasst eine erste axiale Befestigung 68 Mittel zum Einstellen der Ausrichtung des ersten Befestigungsaufbaus 41 bezüglich eines am ersten Befestigungsaufbau 41 zu befestigenden ersten Rotorblock 51. Beispielsweise können diese Mittel mechanisch, hydraulisch, oder pneumatisch ausgeführt sein. Beispielhaft ist in Figur 2 ein mechanisches Mittel mit einer Gewindestange 64 und einer Mutter 65 dargestellt.

Gemäß einer Ausführungsform, die mit anderen hierin beschriebenen Ausführungsformen kombiniert werden kann, umfasst mindestens eines der zweiten Befestigungselemente 44 Mittel zum Einstellen der Ausrichtung des zweiten Befestigungsaufbaus 42 bezüglich eines am zweiten Befestigungsaufbau 42 zu befestigenden zweiten Rotorblock 52. Insbesondere umfasst eine zweite axiale Befestigung 69 Mittel zum Einstellen der Ausrichtung des zweiten Befestigungsaufbaus 42 bezüglich eines am zweiten Befestigungsaufbau 42 zu befestigenden zweiten Rotorblock 52. Beispielsweise, können diese Mittel mechanisch, hydraulisch, oder pneumatisch ausgeführt sind. Beispielhaft ist in Figur 2 ein mechanisches Mittel mit einer Gewindestange 64 und einer Mutter 65 dargestellt.

Unter einer "axialen Befestigung" kann in der vorliegenden Anmeldung eine Befestigung verstanden werden, die zur Befestigung in axialer Richtung dient. Die Axiale Richtung x ist in den Figuren 2 und 3 dargestellt. Typischerweise, ist die axiale Richtung x parallel zur Spindelachse 33A und/oder parallel zu Rotationsachse des ersten Rotorblocks 51 und/oder parallel zur Rotationsachse des zweiten Rotorblocks 52.

Gemäß einer Ausführungsform, die mit anderen hierin beschriebenen Ausführungsformen kombiniert werden kann, umfasst die erste radiale Befestigung 61 Mittel zum Einstellen der Ausrichtung des ersten Befestigungsaufbaus 41 bezüglich des Trägerelements 20. Insbesondere sind diese Mittel mechanisch, hydraulisch, oder pneumatisch ausgeführt und derart konfiguriert, dass die Winkellage des ersten Befestigungsaufbaus 41 um die Achse des ersten Kippbolzens 47 eingestellt werden kann. Beispielsweise kann als mechanisches Mittel zum Einstellen der Ausrichtung des ersten Befestigungsaufbaus 41 eine Gewindestange 66 und eine Mutter 67 umfassen, die derart konfiguriert sind, dass mittels der Mutter 67 und der Gewindestange 66 die Winkellage des ersten Befestigungsaufbaus 41 um die Achse des ersten Kippbolzens 47 eingestellt werden kann.

Gemäß einer Ausführungsform, die mit anderen hierin beschriebenen Ausführungsformen kombiniert werden kann, umfasst die zweite radiale Befestigung 62 Mittel zum Einstellen der Ausrichtung des zweiten Befestigungsaufbaus 42 bezüglich des Trägerelements 20. Insbesondere sind diese Mittel mechanisch, hydraulisch, oder pneumatisch ausgeführt und derart konfiguriert, dass die Winkellage des zweiten Befestigungsaufbaus 42 um die Achse des zweiten Kippbolzens 48 eingestellt werden kann. Beispielsweise kann als mechanisches Mittel zum Einstellen der Ausrichtung des zweiten Befestigungsaufbaus 42 eine Gewindestange 66 und eine Mutter 67 umfassen, die derart konfiguriert sind, dass mittels der Mutter 67 und der Gewindestange 66 die Winkellage des zweiten Befestigungsaufbaus 42 um die Achse des zweiten Kippbolzens 48 eingestellt werden kann.

Bezüglich der an den axialen Befestigungen 68, 69 vorgesehenen Mitteln zum Einstellen der Ausrichtung des Befestigungsaufbauten 41,42 bezüglich der zu befestigenden Rotorblöcke 51, 52 und der an den radialen Befestigungen 61, 62 Mitteln zum Einstellen der Ausrichtung der Befestigungsaufbauten 41, 42 bezüglich des Trägerelements 20 sei angemerkt, dass durch Überlagerung der beiden Einstellmöglichkeiten eine radiale Abstandseinstellung der Rotorblöcke 51, 52 vorgenommen werden kann. Ferner sei angemerkt, dass sich die radialen Befestigungen 61, 62 in radialer Richtung von der Spindelachse 33A aus erstrecken, wie es beispielhaft aus Figur 2 hervorgeht.

Gemäß einer Ausführungsform, die mit anderen hierin beschriebenen Ausführungsformen kombiniert werden kann, umfasst die Montage-/Demontagevorrichtung ein zusätzliches starres Befestigungselement 70 zum starren Verbinden des ersten Rotorblocks 51 und des zweiten Rotorblocks 52. Typischerweise ist das starre Befestigungselement 70 bogenartig ausgeführt, wie es beispielhaft in Figur 4 dargestellt ist. Ferner kann das starre Befestigungselement 70 eine Halterung 71, z.B. eine Hakenaufnahme, zur Befestigung an einem Kran aufweisen. Die Halterung 71 ist in den Figuren 3 und 4 dargestellt.

Im Folgenden werden erfindungsgemäße Verfahren für die Montage/Demontage von einem oder mehreren Rotorblöcken einer Turboladeranordnung, insbesondere mit Gehäuse einer ein- und/oder mehrstufigen Turboladeranordnung (d.h. eine Turboladeranordnung für ein oder mehrere Niederdruckstufen und ein oder mehrere Hochdruckstufen) beschrieben.

Die im Folgenden beschriebenen Verfahren können in Kombination mit den hierein beschriebenen Ausführungsformen der Montage-/Demontagevorrichtung durchgeführt werden. In diesem Zusammenhang wird daraufhingewiesen, dass die im Folgenden beschriebenen Verfahren jedoch nicht zwingend mit den spezifischen hierein beschriebenen Ausführungsformen der Montage-/Demontagevorrichtung durchgeführt werden müssen, sondern auch unabhängig davon durchgeführt werden können.

Gemäß einem Aspekt der Erfindung, wird ein Verfahren zum gleichzeitigen Einsetzen von mindestens zwei Rotorblöcken in ein Gehäuse 130 einer mehrstufigen Turboladeranordnung 100 mittels einer Montage-/Demontagevorrichtung bereitgestellt. Insbesondere ist die Montage-/Demontagevorrichtung eine Montage-/Demontagevorrichtung 10 gemäß einer der hierin beschriebenen Ausführungsformen. Das Verfahren umfasst ein Montieren von jeweils mindestens einem Führungselement 80 pro Rotorblock der Turboladeranordnung. Das mindestens eine Führungselement 80 ist angeordnet und konfiguriert, um die Rotorblöcke beim Einfahren entlang der Rotationsachse der Rotorblöcke zu führen. Ferner ist das mindestens eine Führungselement 80 derart konfiguriert, um die Seitenlast des betreffenden Rotorblocks tragen zu können, insbesondere in dem Fall dass die Montage-/Demontagevorrichtung unter einem Winkel zur Vertikalen montiert wird, wie es beispielhaft in Figur 1 und 4 dargestellt ist.

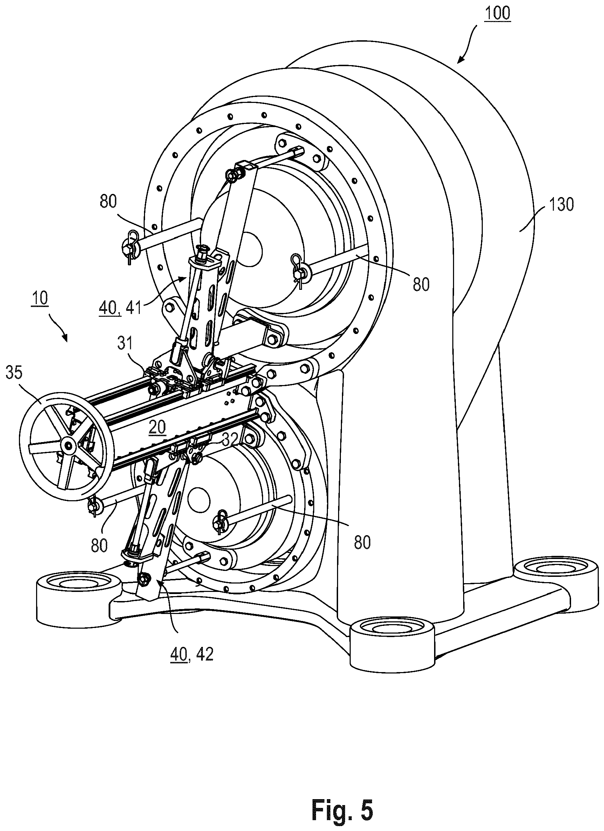

Figur 5 zeigt beispielhaft vier Führungselemente, insbesondere vier Führungsstangen, d. h. zwei pro Rotorblock. Zusätzlich umfasst das Verfahren ein Verbinden der mindestens zwei Rotorblöcke mittels eines starren Befestigungselements 70, wie es beispielhaft in Figur 4 dargestellt ist. Ferner umfasst das Verfahren ein Befestigen eines ersten Befestigungsaufbaus 41 einer Montage-/Demontagevorrichtung 10 mit einem ersten Rotorblock 51, sowie ein Befestigen eines zweiten Befestigungsaufbaus 42 einer Montage-/Demontagevorrichtung 10 mit einem zweiten Rotorblock 52. Darüber hinaus umfasst das Verfahren ein Einfahren der mindestens zwei Rotorblöcke in das Gehäuse 130 der ein- und/oder mehrstufigen Turboladeranordnung 100.

Gemäß einem weiteren Aspekt der Erfindung, wird ein Verfahren zum Herausziehen/Einsetzen eines oder mehrerer Rotorblöcke aus einem Gehäuse 130 einer ein- und/oder mehrstufigen Turboladeranordnung 100 mittels einer Montage-/Demontagevorrichtung bereitgestellt. Insbesondere ist die Montage-/Demontagevorrichtung eine Montage-/Demontagevorrichtung 10 gemäß einer der hierin beschriebenen Ausführungsformen. Das Verfahren umfasst ein Montieren von jeweils mindestens einem Führungselement 80 pro Rotorblock der Turboladeranordnung. Die Führungselemente sind angeordnet und konfiguriert um die Rotorblöcke beim Ausfahren/Einfahren entlang der Rotationsachse der Rotorblöcke zu führen. Zusätzlich umfasst das Verfahren ein Befestigen eines Trägerelements 120 der Montage-/Demontagevorrichtung mit dem Gehäuse 130 der ein- und/oder mehrstufigen Turboladeranordnung. Ferner umfasst das Verfahren, ein Befestigen eines ersten Befestigungsaufbaus 41 der Montage-/Demontagevorrichtung mit einem ersten Rotorblock 51. Alternativ oder zusätzlich umfasst das Verfahren, ein Befestigen eines zweiten Befestigungsaufbaus 42 der Montage-/Demontagevorrichtung mit einem zweiten Rotorblock 52. Darüber hinaus umfasst das Verfahren ein Herausziehen/Einsetzen des ersten Rotorblocks 51 und/oder des zweiten Rotorblocks 52 durch Verschieben des ersten Befestigungsaufbaus 41 und/oder des zweiten Befestigungsaufbaus 42 relativ zum und entlang des Trägerelements 20.

Gemäß einem weiteren Aspekt der Erfindung, wird ein Verfahren zum Bewegen eines oder mehrerer Rotorblöcke bereitgestellt. Das Verfahren umfasst ein Befestigen des einen oder der mehreren Rotorblöcke an einem starren Befestigungselement 70, insbesondere einem starren bügelartigen Befestigungselement, wie es beispielhaft in Figur 4 dargestellt ist. Ferner umfasst das Verfahren ein Bewegen des einen oder der mehrerer Rotorblöcke inklusive einer Montage-/Demontagevorrichtung, insbesondere einer Montage-/Demontagevorrichtung gemäß hierein beschriebenen Ausführungsformen, während der eine oder die mehreren Rotorblöcke am Befestigungselement befestigt sind. Typischerweise ist die Montage-/Demontagevorrichtung beim Bewegen des einen oder der mehrerer Rotorblöcke an dem einen oder den mehreren Rotorblöcken befestigt. Beispielsweise, kann das Bewegen des einen oder der mehrerer Rotorblöcke ein Bewegen mittels eines Krans umfassen, der beispielsweise an der Halterung 71 des starren Befestigungselements befestigt sein kann.

### Bezugszeichenliste

- 10: Montage-/Demontagevorrichtung
- 20: Trägerelement
- 21: erste Seite des Trägerelements
- 22: zweite Seite des Trägerelements
- 23: erste Führungsschienen
- 24: zweite Führungsschienen
- 25: Befestigungselemente des Trägerelements
- 26: erstes Befestigungsende des Trägerelements
- 27: zweites Befestigungsende des Trägerelements
- 30: Verschiebevorrichtung
- 31: ersten Schlitten
- 32: zweiten Schlitten
- 33: Spindel
- 33A: Spindelachse
- 34: Verbindungselement
- 35: Handrad
- 40: Befestigungsvorrichtung
- 41: erster Befestigungsaufbau
- 42: zweiter Befestigungsaufbau
- 43: erste Befestigungselemente
- 44: zweite Befestigungselemente
- 45: erste Profilstangenkonstruktion
- 46: zweite Profilstangenkonstruktion
- 47: erster Kippbolzen
- 48: zweiter Kippbolzen
- 51: erster Rotorblock
- 52: zweiter Rotorblock
- 61: erste radiale Befestigung
- 62: zweiten radialen Befestigung
- 64,66: Gewindestange
- 65, 67: Mutter
- 68: erste axiale Befestigung
- 69: zweite axiale Befestigung
- 70: starres Befestigungselement
- 71: Halterung zur Befestigung an einem Kran
- 80: Führungselement
- 100: Turboladeranordnung
- 110: Hochdruckstufe
- 120: Niederdruckstrufe
- 130: Gehäuse der ein- und/oder mehrstufigen Turboladeranordnung
- 131: Gehäuse der Niederdruckstufe
- 132: Gehäuse der Hochdruckstufe
- 133: Verdichterseitiger Flansch des Gehäuses der Hochdruckstufe
- 134: Verdichterseitiger Flansch des Gehäuses der Niederdruckstufe
- x: axiale Richtung
- r: radiale Richtung
- B1, B2, B3, B4: Befestigungsstellen

## Patentansprüche

1. Eine Montage-/Demontagevorrichtung (10) zum translatorischen Verschieben einer oder mehrerer Rotorblöcke in einem Gehäuse (130) einer ein- und/oder mehrstufigen Turboladeranordnung (100), umfassend:
- ein Trägerelement (20) mit auf einer ersten Längsseite (21) des Trägerelements angerangeordneten ersten Führungsschienen (23) und auf einer zweiten Längsseite (22) des Trägerelements angerangeordneten zweiten Führungsschienen (24);
- eine Verschiebevorrichtung (30) mit:
- einem ersten Schlitten (31), der auf den ersten Führungsschienen (23) verschiebbar angeordnet ist,
- einem zweiten Schlitten (32), der auf den zweiten Führungsschienen (24) verschiebbar angeordnet ist,
- einer Spindel (33), die im Trägerelement (20) drehbar gelagert ist, und
- einem Verbindungselement (34), das mit der Spindel (33), dem ersten Schlitten (31) und/oder mit dem zweiten Schlitten (32) verbunden ist, wobei das Verbindungselement (34) konfiguriert ist, um eine Rotationsbewegung der Spindel in eine Translationsbewegung des ersten Schlitten (31) und/oder des zweiten Schlitten (32) zu übertragen; und
- eine Befestigungsvorrichtung (40) mit einem ersten Befestigungsaufbau (41) zur Befestigung eines ersten Rotorblocks (51) und einem zweiten Befestigungsaufbau (42) zur Befestigung eines zweiten Rotorblocks (52); wobei der erste Befestigungsaufbau (41) mit dem ersten Schlitten (31) verbunden ist, und wobei der zweite Befestigungsaufbau (42) mit dem zweiten Schlitten (32) verbunden ist.

2. Die Montage-/Demontagevorrichtung (10) gemäß Anspruch 1, wobei das Trägerelement (20) auf einer Befestigungsseite des Trägerelements Befestigungselemente (25) zur Befestigung an dem Gehäuse (130) der ein- und/oder mehrstufigen Turboladeranordnung (100) umfasst, insbesondere zur Befestigung an einem Gehäusebereich, der zwischen einer Hochdruckstufe (110) und einer Niederdruckstufe (120) des Gehäuses (130) angeordnet ist.

3. Die Montage-/Demontagevorrichtung (10) gemäß Anspruch 2, wobei ein erstes Befestigungsende (26) des Trägerelements (20) mit einem verdichterseitigen Flansch (134) eines Gehäuses (131) der Niederdruckstufe (120) des Gehäuses (130) der ein- und/oder mehrstufigen Turboladeranordnung (100) verbindbar ist, und wobei ein zweites Befestigungsende (27) des Trägerelements (20) mit einem verdichterseitigen Flansch (133) eines Gehäuses (132) der Hochdruckstufe (110) des Gehäuses (130) der ein- und/oder mehrstufigen Turboladeranordnung (100) verbindbar ist.

4. Die Montage-/Demontagevorrichtung (10) gemäß einem der Ansprüche 1 bis 3, wobei der erste Befestigungsaufbau (41) zwei in radialer Richtung (r) beabstandete, sich gegenüberliegende erste Befestigungselemente (43) zur Befestigung des ersten Befestigungsaufbaus (41) an dem ersten Rotorblock (51) umfasst.

5. Die Montage-/Demontagevorrichtung (10) gemäß Anspruch 4, wobei die ersten Befestigungselemente (43) über eine erste Profilstangenkonstruktion (45) mit einem ersten Kippbolzen (47) und einer ersten radialen Befestigung (61) verbunden sind, wobei der erste Kippbolzen (47) und die erste radiale Befestigung (61) mit dem ersten Schlitten (31), insbesondere an zwei in Richtung der Spindelachse (33A) axial voneinander beabstandeten Befestigungsstellen (B1, B2), verbunden sind.

6. Die Montage-/Demontagevorrichtung (10) gemäß einem der Ansprüche 1 bis 5, wobei der zweite Befestigungsaufbau (42) zwei in radialer Richtung beabstandete, sich gegenüberliegende zweite Befestigungselemente (44) zur Befestigung des zweiten Befestigungsaufbaus (42) an dem zweiten Rotorblock (52) umfasst.

7. Die Montage-/Demontagevorrichtung (10) gemäß Anspruch 6, wobei die zweiten Befestigungselemente (44) über eine zweite Profilstangenkonstruktion (46) mit einer zweiten Kippbolzen (48) und einer zweiten radialen Befestigung (62) verbunden sind, wobei der zweite Kippbolzen (48) und die zweite radiale Befestigung (62) mit dem zweiten Schlitten (32), insbesondere an zwei in Richtung der Spindelachse 33A axial voneinander beanstandeten Befestigungsstellen (B3, B4), verbunden sind.

8. Die Montage-/Demontagevorrichtung (10) gemäß Anspruch 4 und 6 oder 5 und 7, wobei ein Abstand (D1) zwischen den ersten Befestigungselementen (43) größer oder gleich ist als/wie ein Abstand (D2) zwischen den zweiten Befestigungselementen (44) (D1 ≥ D2).

9. Die Montage-/Demontagevorrichtung (10) gemäß einem der Ansprüche 1 bis 8, wobei das Verbindungselement (34) über eine lösbare Verbindung, insbesondere eine Schraubverbindung, mit dem ersten Schlitten (31) und/oder mit dem zweiten Schlitten (32) verbunden ist.

10. Die Montage-/Demontagevorrichtung (10) gemäß einem der Ansprüche 4 bis 9, wobei mindestens eines der ersten Befestigungselemente (43), insbesondere eine erste axiale Befestigung (68), Mittel zum Einstellen der Ausrichtung des ersten Befestigungsaufbaus (41) bezüglich eines am ersten Befestigungsaufbau (41) zu befestigenden ersten Rotorblock (51) umfasst, insbesondere wobei diese Mittel mechanisch, hydraulisch, oder pneumatisch ausgeführt sind.

11. Die Montage-/Demontagevorrichtung (10) gemäß einem der Ansprüche 5 bis 10, wobei mindestens eines der zweiten Befestigungselemente (44), insbesondere eine zweite axiale Befestigung (69), Mittel zum Einstellen der Ausrichtung des zweiten Befestigungsaufbaus (42) bezüglich eines am zweiten Befestigungsaufbau (42) zu befestigenden zweiten Rotorblock (52) umfasst, insbesondere wobei diese Mittel mechanisch, hydraulisch, oder pneumatisch ausgeführt sind.

12. Die Montage-/Demontagevorrichtung (10) gemäß einem der Ansprüche 5 bis 11, wobei die erste radiale Befestigung (61) Mittel zum Einstellen der Ausrichtung des ersten Befestigungsaufbaus (41) bezüglich des Trägerelements (20) umfasst, insbesondere wobei diese Mittel mechanisch, hydraulisch, oder pneumatisch ausgeführt und derart konfiguriert sind, dass die Winkellage des ersten Befestigungsaufbaus (41) um die Achse des ersten Kippbolzens (47) eingestellt werden kann.

13. Die Montage-/Demontagevorrichtung (10) gemäß einem der Ansprüche 7 bis 12, wobei die zweite radiale Befestigung (62) Mittel zum Einstellen der Ausrichtung des zweiten Befestigungsaufbaus (42) bezüglich des Trägerelements (20) umfasst, insbesondere wobei diese Mittel mechanisch, hydraulisch, oder pneumatisch ausgeführt und derart konfiguriert sind, dass die Winkellage des zweiten Befestigungsaufbaus (42) um die Achse des zweiten Kippbolzens (48) eingestellt werden kann.

14. Die Montage-/Demontagevorrichtung (10) gemäß einem der Ansprüche 1 bis 13, ferner umfassend ein zusätzliches starres Befestigungselement (70) zum starren Verbinden des ersten Rotorblocks (51) und des zweiten Rotorblocks (52), insbesondere wobei das starre Verbindungselement (70) eine Halterung (71) zur Befestigung an einem Kran aufweist.

15. Verfahren zum gleichzeitigen Einsetzen von mindestens zwei Rotorblöcken in ein Gehäuse (130) einer mehrstufigen Turboladeranordnung (100) mittels einer Montage-/Demontagevorrichtung (10), insbesondere mittels einer Montage-/Demontagevorrichtung (10) gemäß einem der Ansprüche 1 bis 13, umfassend:
- Montieren von jeweils mindestens einem Führungselement (80) pro Rotorblock der Turboladeranordnung (100), wobei das mindestens eine Führungselement (80) angeordnet und konfiguriert ist, um die Rotorblöcke beim Einfahren entlang der Rotationsachse der Rotorblöcke zu führen,
- Verbinden der mindestens zwei Rotorblöcken mittels eines starren Befestigungselements (70);
- Befestigen eines ersten Befestigungsaufbaus (41) einer Montage-/Demontagevorrichtung (10) mit einem ersten Rotorblock (51);
- Befestigen eines zweiten Befestigungsaufbaus (42) einer Montage-/Demontagevorrichtung (10) mit einem zweiten Rotorblock (52);
- Einfahren der mindestens zwei Rotorblöcke in das Gehäuse (130) der mehrstufigen Turboladeranordnung (100).

16. Verfahren nach Anspruch 15, ferner umfassend ein Befestigen eines Trägerelements (20) an dem Gehäuse (130) der mehrstufigen Turboladeranordnung (100), und wobei das Einfahren der mindestens zwei Rotorblöcke in das mehrstufige Gehäuse ein Verschieben des ersten Befestigungsaufbaus (41) und des zweiten Befestigungsaufbaus (41) relativ zum und entlang des Trägerelements (20) umfasst.

17. Verfahren zum Herausziehen/Einsetzen eines oder mehrerer Rotorblöcke aus einem Gehäuse (130) einer ein- oder mehrstufigen Turboladeranordnung (100) mittels einer Montage-/Demontagevorrichtung (10), insbesondere mittels einer Montage-/Demontagevorrichtung gemäß einem der Ansprüche 1 bis 13, umfassend:
- Montieren von jeweils mindestens einem Führungselement (80) pro Rotorblock der Turboladeranordnung (100), wobei die Führungselemente (80) angeordnet und konfiguriert sind um die Rotorblöcke beim Ausfahren/Einfahren entlang der Rotationsachse der Rotorblöcke zu führen;
- Befestigen eines Trägerelements (20) der Montage-/Demontagevorrichtung (10) mit dem Gehäuse (130) der ein- oder mehrstufigen Turboladeranordnung (100);
- Befestigen eines ersten Befestigungsaufbaus (41) der Montage-/Demontagevorrichtung (10) mit einem ersten Rotorblock (51);
und/oder eines zweiten Befestigungsaufbaus (42) der Montage-/Demontagevorrichtung (10) mit einem zweiten Rotorblock (52);
- Herausziehen/Einsetzen des ersten Rotorblocks (51) und/oder des zweiten Rotorblocks (52) durch Verschieben des ersten Befestigungsaufbaus (41) und/oder des zweiten Befestigungsaufbaus (41) relativ zum und entlang des Trägerelements (20).

18. Verfahren zum Bewegen eines oder mehrerer Rotorblöcke, umfassend
- Befestigen des einen oder der mehreren Rotorblöcke an einem starren Befestigungselement (70), insbesondere einem starren bügelartigen Befestigungselement; und
- Bewegen des einen oder der mehrerer Rotorblöcke inklusive einer Montage-/Demontagevorrichtung (10), insbesondere einer Montage-/Demontagevorrichtung gemäß einem der Ansprüche 1 bis 13, während der eine oder die mehreren Rotorblöcke am Befestigungselement befestigt sind.
